# EUROPEAN PATENT APPLICATION

(11) **EP 4 701 137 A1**
(43) Date of publication of application: **25.02.2026**
(21) Application number: 25196237.9
(22) Date of filing: 15.08.2025
(51) Int. Cl.: H04L 12/12, H04L 12/40

(54) **MANAGING ACTIVATION AND FAILURE DETECTION IN A VEHICLE NETWORK**

(30) Priority: 23.08.2024 JP 2024143313
(71) Applicant: TOYOTA JIDOSHA KABUSHIKI KAISHA, Toyota-shi, Aichi-ken 471-8571 (JP)
(72) Inventor: HAYASHI, Kenichiro, Toyota-shi, 471-8571 (JP); ABE, Naoya, Toyota-shi, 471-8571 (JP)
(74) Representative: J A Kemp LLP

(57) **Abstract**

An electronic controller serves as a second device in an in-vehicle network system. The in-vehicle network system includes a first device, the second device, and a third device each as an electronic controller having a network management function. The first device transmits a periodic message. The second device performs a failure determination based on the periodic message from the first device. The third device has a partial network function. The in-vehicle network system includes a first communication bus connected to the first device, a second communication bus connected to the second device and the third device, and a relay device that relays a message among the communication buses. The second device stops the failure determination when stopping transmission of an NM message, or an activation notification.

## Description

### CROSS-REFERENCE TO RELATED APPLICATIONS

This application is based upon and claims the benefit of priority from Japanese Patent Application No. 2024-143313, filed on August 23, 2024, the entire contents of which are incorporated herein by reference.

### BACKGROUND

### 1. Field

The following description relates to an electronic controller, a determination method, a determination program, a transmission method, and a transmission program.

### 2. Description of Related Art

Japanese Laid-Open Patent Publication No. 2024-22118 discloses an in-vehicle network system. The in-vehicle network system includes multiple electronic controllers (e.g., electronic control units (ECUs)). Hereinafter, an electronic controller will be referred to as an ECU.

The patent literature described above discloses an ECU that is configured to check the destination of a message and an ECU that is configured not to check the destination of a message when the message is received from another ECU.

The in-vehicle network system may include both an ECU configured to check the destination of a message and an ECU configured not to check the destination of a message when the message is received from another ECU.

An ECU is operated in an active state in which the ECU is allowed to communicate with another ECU and a standby state in which the communication is stopped to reduce power consumption. The ECU has a network management function of switching from the standby state to the active state when receiving a request for activation from a communication peer through the message. The network management function is referred to as the NM function. ECUs having the NM function include an ECU having a partial network function and an ECU that does not have the partial network function. Hereafter, the partial network function is referred to as the PN function.

The ECU having the PN function transmits a PN message including information indicating the destination to a communication peer. The PN message is transmitted so that another ECU having the PN function is switched to the active state. When an ECU having the PN function receives a PN message, the ECU checks the destination of the message. Then, only when the message is destined for the ECU, the ECU is switched to the active state.

An ECU that does not have the PN function transmits an NM message to a communication peer. The NM message is transmitted so that another ECU that does not have the PN function is switched to the active state. The ECU that does not have the PN function is configured to switch to the active state without checking the destination of a received message regardless of whether the message is an NM message or a PN message.

In the in-vehicle network system, an ECU having the PN function and an ECU that does not have the PN function may be connected to a single communication bus. When the ECU that does not have the PN function is connected to such a communication bus and receives an PN message, the ECU switches to the active state even when an NM message is not transmitted. In this case, since an NM message is not transmitted, an ECU that does not have the PN function and is connected to another communication bus remains in the standby state.

As described above, an ECU that does not have the PN function may switch to the active state, while other ECUs that do not have the PN function remain in the standby state. An ECU having the NM function is configured to determine, when reception of periodic messages from an ECU subject to monitoring is stopped, that the ECU has a failure. Consequently, when only some of the ECUs are switched to the active state, an ECU that does not have the PN function and is in the active state erroneously determines that an ECU that is subject to monitoring and is in the standby state has a failure.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure is an electronic controller that is included in an in-vehicle network system and has a network management function. The network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first communication bus connected to the first device, a second communication bus connected to the second device and the third device, and a relay device connected to the first communication bus and the second communication bus and configured to electronically relay a message among communication buses. The electronic controller is the second device. The electronic controller is configured to stop the failure determination when stopping transmission of the activation notification.

An aspect of the present disclosure is an electronic controller that is included in an in-vehicle network system and has a network management function. The network management function includes switching from a standby state in which communication is not performed to an active state in which communication is performable when electronically receiving an activation notification. The activation notification is a message requesting activation. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first network configured to relay the periodic message, the first network including a first communication bus connected to the first device and a second communication bus connected to the second device and the third device, a relay device connected to the first communication bus and the second communication bus and configured to electronically relay a message among communication buses, and a second network connecting the first device and the second device. The second network differs from the first network. The electronic controller is the second device. The electronic controller is configured to stop the failure determination when detecting that the first device is switched to the standby state based on communication with the first device through the second network.

An aspect of the present disclosure is an electronic controller that is included in an in-vehicle network system and has a network management function. The network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first communication bus connected to the first device, a second communication bus connected to the second device and the third device, and a relay device connected to the first communication bus and the second communication bus and configured to electronically relay a message among communication buses. The electronic controller differs from the first device and the second device. When the first device is switched to the standby state, instead of the first device, the electronic controller is configured to transmit the periodic message toward the second device.

An aspect of the present disclosure is a determination method executed by an electronic controller that is included in an in-vehicle network system and has a network management function. The network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first communication bus connected to the first device, a second communication bus connected to the second device and the third device, and a relay device connected to the first communication bus and the second communication bus and configured to electronically relay a message among communication buses. The electronic controller is the second device. The determination method includes stopping the failure determination performed by the second device with processing circuitry of the second device when the second device stops transmission of the activation notification.

An aspect of the present disclosure is a determination program executed by an electronic controller that is included in an in-vehicle network system and has a network management function. The network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first communication bus connected to the first device, a second communication bus connected to the second device and the third device, and a relay device connected to the first communication bus and the second communication bus and configured to electronically relay a message among communication buses. The electronic controller is the second device. The determination program, when executed by processing circuitry of the second device, causes the processing circuitry to stop the failure determination when the second device stops transmission of the activation notification.

An aspect of the present disclosure is a determination method executed by an electronic controller that is included in an in-vehicle network system and has a network management function. The network management function includes switching from a standby state in which communication is not performed to an active state in which communication is performable when electronically receiving an activation notification. The activation notification is a message requesting activation. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first network configured to relay the periodic message, the first network including a first communication bus connected to the first device and a second communication bus connected to the second device and the third device, a relay device connected to the first communication bus and the second communication bus and configured to electronically relay a message among communication buses, and a second network connecting the first device and the second device. The second network differs from the first network. The electronic controller is the second device. The determination method includes causing processing circuitry of the second device to stop the failure determination performed by the second device when the second device detects that the first device is switched to the standby state based on communication with the first device through the second network.

An aspect of the present disclosure is a determination program executed by an electronic controller that is included in an in-vehicle network system and has a network management function. The network management function includes switching from a standby state in which communication is not performed to an active state in which communication is performable when electronically receiving an activation notification. The activation notification is a message requesting activation. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first network configured to relay the periodic message, the first network including a first communication bus connected to the first device and a second communication bus connected to the second device and the third device, a relay device connected to the first communication bus and the second communication bus and configured to electronically relay a message among communication buses, and a second network connecting the first device and the second device. The second network differs from the first network. The electronic controller is the second device. The determination program, when executed by processing circuitry of the second device, causes the processing circuitry to stop the failure determination when the second device detects that the first device is switched to the standby state based on communication with the first device through the second network.

An aspect of the present disclosure is a transmission method executed by an electronic controller that is included in an in-vehicle network system and has a network management function. The network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first communication bus connected to the first device, a second communication bus connected to the second device and the third device, and a relay device connected to the first communication bus and the second communication bus and configured to electronically relay a message among communication buses. The electronic controller differs from the first device and the second device. The transmission method includes, when the first device is switched to the standby state, causing the electronic controller, instead of the first device, to transmit the periodic message toward the second device by processing circuitry of the electronic controller.

An aspect of the present disclosure is a transmission program executed by an electronic controller that is included in an in-vehicle network system and has a network management function. The network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification. The in-vehicle network system includes a first device having the network management function and configured to transmit a periodic message, the periodic message being periodically transmitted, a second device having the network management function and configured to execute a failure determination that determines that the first device has a failure when reception of the periodic message from the first device is stopped, a third device having the network management function and a partial network function such that when receiving the activation notification and a destination of the activation notification differs from the third device, the third device does not switch from the standby state to the active state, a first communication bus connected to the first device, a second communication bus connected to the second device and the third device, and a relay device connected to the first communication bus and the second communication bus and configured to electronically relay a message among communication buses. The electronic controller differs from the first device and the second device. The transmission program, when the first device is switched to the standby state during execution of processing circuitry of the electronic controller, causes the processing circuitry, instead of the first device, to transmit the periodic message toward the second device.

Other features and aspects will be apparent from the following detailed description, the drawings, and the claims.

### BRIEF DESCRIPTION OF THE DRAWINGS

Fig. 1 is a schematic diagram showing the configuration of an in-vehicle network system according to a first embodiment.
Fig. 2 is a schematic diagram of the in-vehicle network system of the first embodiment when an electronic controller connected to a first communication bus is switched to a standby state.
Fig. 3 is a schematic diagram showing the configuration of a second device in the first embodiment.
Fig. 4 is a sequence diagram showing communication performed in the in-vehicle network system of the first embodiment.
Fig. 5 is a schematic diagram showing the configuration of an in-vehicle network system according to a second embodiment.
Fig. 6 is a schematic diagram showing the configuration of a second device in the second embodiment.
Fig. 7 is a sequence diagram showing communication performed in the in-vehicle network system of the second embodiment.
Fig. 8 is a schematic diagram showing the configuration of a relay device in a third embodiment.
Fig. 9 is a sequence diagram showing communication performed in the in-vehicle network system of the third embodiment.
Fig. 10 is a sequence diagram showing a modified example of the communication shown in Fig. 7.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

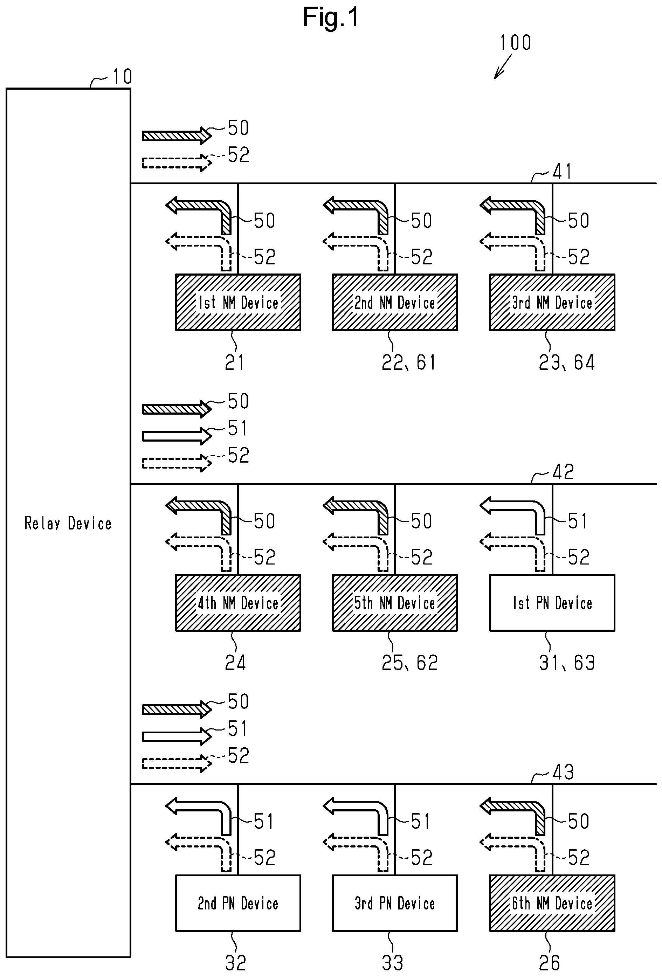

A first embodiment of an in-vehicle network system will now be described with reference to Figs. 1 to 4.

Configuration of the In-Vehicle Network System 100

As shown in Fig. 1, the in-vehicle network system 100 includes multiple electronic controllers (e.g., electronic control units (ECUs)). Hereinafter, an electronic controller may be referred to as an ECU. The ECUs in the in-vehicle network system 100 include an ECU having a network management function and a relay device 10. The network management function may be referred to as the NM function. In Fig. 1, each electronic controller is depicted as a rectangle.

When receiving an activation notification, the ECU having the NM function is switched from a standby state in which the ECU does not perform communication to an active state in which the ECU is allowed to perform communication. The activation notification is a message requesting activation of the ECU. ECUs having the NM function include an ECU having a partial network function and an ECU that does not have the partial network function. Hereafter, the partial network function may be referred to as the PN function.

In the in-vehicle network system 100, a first PN device 31, a second PN device 32, and a third PN device 33 are each an ECU having the PN function.

In the in-vehicle network system 100, the ECUs that do not have the PN function include a first NM device 21, a second NM device 22, a third NM device 23, a fourth NM device 24, a fifth NM device 25, and a sixth NM device 26.

As shown in Fig. 1, the in-vehicle network system 100 includes a first communication bus 41, a second communication bus 42, and a third communication bus 43. The first communication bus 41 is connected to the first NM device 21, the second NM device 22, and the third NM device 23. The second communication bus 42 is connected to the fourth NM device 24, the fifth NM device 25, and the first PN device 31. The third communication bus 43 is connected to the second PN device 32, the third PN device 33, and the sixth NM device 26.

In the in-vehicle network system 100, the ECUs are connected to perform communication by transmitting and receiving a message through the communication buses. In the in-vehicle network system 100, the first NM device 21, the second NM device 22, the third NM device 23 transmit and receive a message through the first communication bus 41. In the in-vehicle network system 100, the fourth NM device 24, the fifth NM device 25, and the first PN device 31 transmit and receive a message through the second communication bus 42. In the in-vehicle network system 100, the second PN device 32, the third PN device 33, and the sixth NM device 26 transmit and receive a message through the third communication bus 43.

In the in-vehicle network system 100, the relay device 10 is connected to all of the first communication bus 41, the second communication bus 42, and the third communication bus 43. The relay device 10 relays a message transmitted among the first communication bus 41, the second communication bus 42, and the third communication bus 43. In an example, the relay device 10 receives a message from the first NM device 21 through the first communication bus 41. The relay device 10 transmits the message, received from the first NM device 21, toward the ECUs connected to the second communication bus 42 and the third communication bus 43.

In the in-vehicle network system 100, an ECU communicates with another ECU to implement a specified function in the vehicle. The combination of ECUs for implementing a specified function in the in-vehicle network system 100 varies in accordance with the function. In the in-vehicle network system 100, an ECU having the PN function communicates with another ECU having the PN function to implement a specified function. Also, in the in-vehicle network system 100, an ECU that does not have the PN function communicates with another ECU that does not have the PN function to implement a specified function.

In the in-vehicle network system 100, to implement a specified function, an ECU transmits an activation notification to another ECU that needs to be activated to implement the function. In other words, in the in-vehicle network system 100, each ECU transmits the activation notification toward another ECU when communication with the ECU is needed.

As shown in Fig. 1, the ECUs having the PN function transmit a PN message 51 as the activation notification. An ECU having the PN function transmits the PN message 51 to request activation of another ECU having the PN function. In this case, the ECU having the PN function transmits the PN message 51 with identification information of the destination ECU, which is requested to be activated.

As shown in Fig. 1, the ECUs that do not have the PN function transmit a NM message 50 as the activation notification. An ECU that does not have the PN function transmits the NM message 50 to request activation of another ECU that does not have the PN function. In this case, the ECU that does not have the PN function transmits the NM message 50 without identification information of the destination ECU, which is requested to be activated. This is different from the ECU having the PN function.

When an ECU having the PN function receives an activation notification, the ECU checks the destination of the activation notification. When the activation notification is a PN message 51 having identification information of its own as the destination, the ECU having the PN function switches from the standby state to the active state. On the other hand, when the activation notification is an NM message 50 or an PN message 51 that does not have identification information of its own as the destination, the ECU having the PN function does not switch to the active state.

When an ECU that does not have the PN function receives an activation notification, the ECU switches from the standby state to the active state without checking the destination of the activation notification. In other words, when an ECU that does not have the PN function receives an activation notification, the ECU switches from the standby state to the active state regardless of whether the activation notification is an NM message 50 or a PN message 51.

As described above, when an ECU having the PN function transmits a PN message 51, an ECU that does not have the PN function and receives the message switches to the active state. Also, an ECU having the PN function and receiving the message switches to the active state when the PN message 51 is destined for the ECU. When an ECU that does not have the PN function transmits an NM message 50, among the ECUs receiving the message, only the ECUs that do not have the PN function switch to the active state.

As described above, the relay device 10 relays a message among the communication buses. The relay device 10 transmits a PN message 51, which is transmitted from an ECU having the PN function, to a communication bus that is connected to another ECU having the PN function. In an example, when the first PN device 31 transmits a PN message 51, the relay device 10 transmits the PN message 51 to the third communication bus 43, which is connected to the second PN device 32 and the third PN device 33.

The relay device 10 also transmits an NM message 50, which is transmitted from an ECU that does not have the PN function, to a communication bus that is connected to another ECU that does not have the PN function. In an example, when the first NM device 21 transmits an NM message 50, the relay device 10 transmits the NM message 50 to the second communication bus 42, which is connected to the fourth NM device 24 and the fifth NM device 25, and the third communication bus 43, which is connected to the sixth NM device 26.

In addition, the relay device 10 itself transmits an NM message 50 and a PN message 51. While receiving a PN message 51 from another ECU, the relay device 10 relays the PN message 51 and also transmits its own PN message 51 toward a communication bus that is connected to an ECU having the PN function. Thus, as shown in Fig. 1, while receiving a PN message 51 from another ECU, the relay device 10 transmits PN messages 51 toward the second communication bus 42 and the third communication bus 43.

While receiving an NM message 50 from another ECU, the relay device 10 relays the NM message 50 and also transmits its own NM message 50 toward a communication bus that is connected to an ECU that does not have the PN function. Thus, as shown in Fig. 1, while receiving an NM message 50 from another ECU, the relay device 10 transmits NM messages 50 toward the first communication bus 41, the second communication bus 42, and the third communication bus 43.

As shown in Fig. 1, in the in-vehicle network system 100, each ECU transmits a control message 52 in addition to the PN message 51 and the NM message 50. The control message 52 is transmitted so that information needed to implement a specified function is exchanged between the ECUs. For example, as the control message 52, each ECU transmits information such as the rotation speed of the engine in the vehicle to another ECU. The control message 52 collectively refers to messages transmitted from each ECU in the in-vehicle network system 100 excluding the activation notification.

In the in-vehicle network system 100, the second NM device 22 and the third NM device 23 transmit a periodic message. The periodic message is the control message 52 periodically transmitted from the second NM device 22 and the third NM device 23. The second NM device 22 and the third NM device 23 transmit travel speed information as the periodic message. The travel speed information indicates the travel speed of the vehicle including the in-vehicle network system 100.

In the in-vehicle network system 100, the fifth NM device 25 receives the periodic message. The fifth NM device 25 determines that the second NM device 22 has a failure when reception of the periodic message from the second NM device 22 is stopped. Also, the fifth NM device 25 determines that the third NM device 23 has a failure when reception of the periodic message from the third NM device 23 is stopped. Thus, the fifth NM device 25 separately determines a failure of the second NM device 22 and the third NM device 23.

In the in-vehicle network system 100, the second NM device 22 is referred to as a first device 61. In the in-vehicle network system 100, the third NM device 23 is referred to as a fourth device 64. The first device 61 and the fourth device 64 transmit the periodic message.

In the in-vehicle network system 100, an ECU that performs the failure determination is referred to as a second device 62. In the in-vehicle network system 100, the fifth NM device 25 is the second device 62.

In the in-vehicle network system 100, an ECU having the PN function that is connected to the same communication bus as the second device 62 is referred to as a third device 63. In the in-vehicle network system 100, the first PN device 31 is the third device 63.

Configuration of Switching ECU to Standby State in the In-Vehicle Network System 100

As described above, when an ECU implements a specified function, the ECU transmits an activation notification to another ECU that needs to be activated to implement the function. Each ECU periodically transmits the activation notification until the specified function is implemented. When the implementation of the specified function is accomplished, the ECU stops transmitting the activation notification.

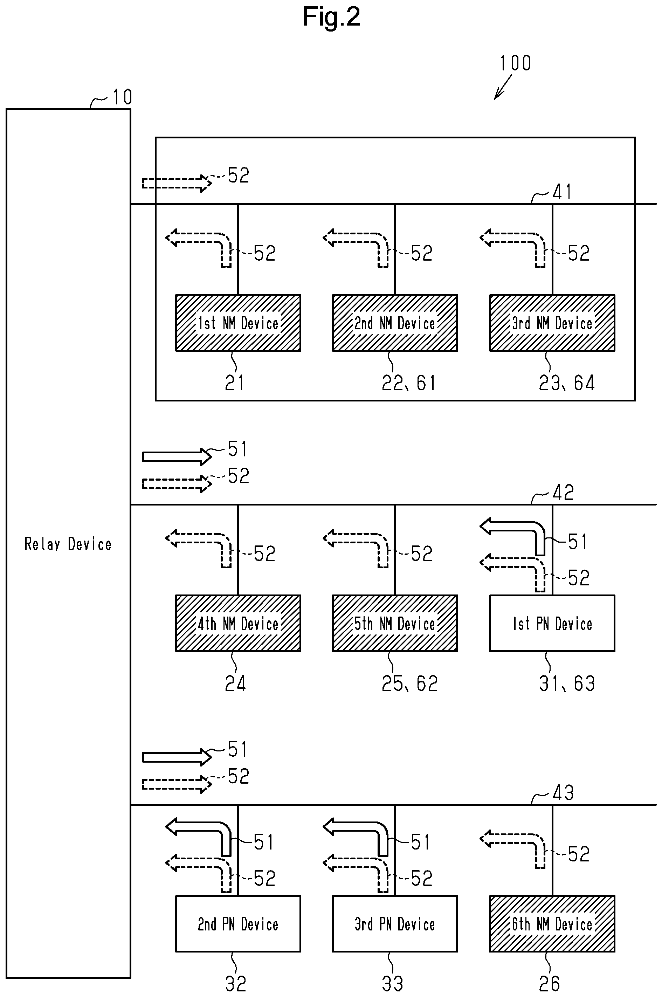

Fig. 2 shows the configuration of ECUs that do not have the PN function in the in-vehicle network system 100 shown in Fig. 1 when the implementation of the specified function is accomplished. More specifically, in Fig. 2, all of the ECUs that do not have the PN function have stopped transmitting the NM message 50.

As described above, the relay device 10 itself transmits an NM message 50 and a PN message 51. While receiving an NM message 50 from another ECU, the relay device 10 itself periodically transmits an NM message 50 toward a communication bus that is connected to an ECU that does not have the PN function. While receiving a PN message 51 from another ECU, the relay device 10 itself periodically transmits a PN message 51 toward a communication bus that is connected to an ECU having the PN function.

When all of the ECUs that do not have the PN function stop transmitting the NM message 50, the relay device 10 does not receive the NM message 50 from the ECUs. When reception of the NM message 50 is stopped, the relay device 10 stops transmitting its own NM message 50.

When an ECU switches to the active state, the ECU continues to be in the active state for a fixed length of time each time the activation notification is received. The ECU switches from the active state to the standby state when reception of the activation notification from other ECUs is stopped. In other words, when an ECU in the in-vehicle network system 100 does not receive the activation notification for a fixed length of time or longer, the ECU switches from the active state to the standby state.

In the example shown in Fig. 2, all of the ECUs that do not have the PN function and the relay device 10 have stopped transmitting the NM message 50. Thus, the ECUs connected to the first communication bus 41 stop receiving the NM message 50. As described above, the relay device 10 does not relay the PN message 51 to the ECUs connected to the first communication bus 41. Therefore, in the example shown in Fig. 2, the ECUs connected to the first communication bus 41 have stopped receiving the activation notification. In Fig. 2, the ECUs surrounded by the rectangle switch from the active state to the standby state. Thus, in the example shown in Fig. 2, the first device 61 and the fourth device 64 switch to the standby state.

In the example shown in Fig. 2, the ECUs connected to the second communication bus 42 stop receiving the NM message 50 in the same manner as the ECUs connected to the first communication bus 41. However, as shown in Fig. 2, the first PN device 31, which is an ECU having the PN function, is connected to the second communication bus 42. Hence, the PN message 51 is transmitted to the ECUs connected to the second communication bus 42. Thus, in the example shown in Fig. 2, the ECUs connected to the second communication bus 42 continue to receive the activation notification even when transmission of the NM message 50 is stopped. In the example shown in Fig. 2, the fourth NM device 24 and the fifth NM device 25, which are ECUs that do not have the PN function, continue to be in the active state even when transmission of the NM message 50 is stopped. As described above, in the example shown in Fig. 2, since the second device 62 is connected to the same second communication bus 42 as the third device 63, the second device 62 remains in the active state even when transmission of the NM message 50 is stopped.

In Fig. 2, while the first device 61 and the fourth device 64 are switched to the standby state, the second device 62 remains in the active state. In this example, when switched to the standby state, the first device 61 and the fourth device 64 stop transmitting the periodic message. In this case, since the second device 62 does not receive the periodic message, the second device 62 erroneously determines that the first device 61 and the fourth device 64 have a failure.

Configuration of the Second Device 62

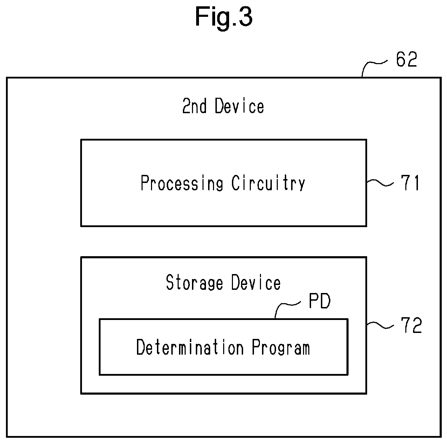

Fig. 3 shows the configuration of the second device 62. As shown in Fig. 3, the second device 62 stores processing circuitry 71 and a storage device 72.

The processing circuitry 71 executes programs stored in the storage device 72 to execute various processes. The processing circuitry 71 includes a processor.

As shown in Fig. 3, the storage device 72 stores a determination program PD. The determination program PD, when executed by the processing circuitry 71, causes the processing circuitry 71 to execute and stop the failure determination. When the processing circuitry 71 executes the determination program PD, the second device 62 limits errors in the failure determination.

Communication Performed in the In-Vehicle Network System 100

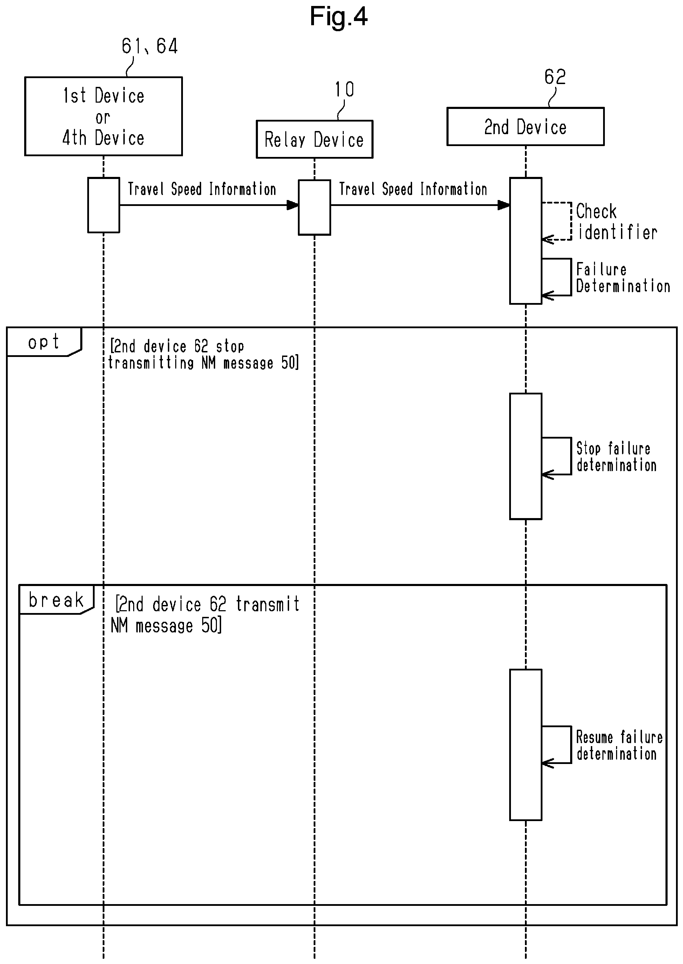

Fig. 4 shows communication performed by the second device 62, the relay device 10, and one of the first device 61 and the fourth device 64 in the in-vehicle network system 100 for the failure determination performed by the second device 62. The second device 62 and the relay device 10 perform communication with the ECU of the first device 61 and the ECU of the fourth device 64 in the manner shown in Fig. 4. When the processing circuitry 71 executes the determination program PD, the second device 62 executes the processes of the second device 62 shown in Fig. 4.

In Fig. 4, the condition is that the second device 62 transmits the NM message 50 to ECUs that do not have the PN function to implement a specified function.

As shown in the upper section of Fig. 4, while being in the active state, the first device 61 and the fourth device 64 transmit travel speed information as the periodic message. The first device 61 and the fourth device 64 each transmit travel speed information including an identifier that is information for identifying the ECU from which the travel speed information is originated. That is, the first device 61 transmits travel speed information including an identifier indicating the first device 61. The fourth device 64 transmits travel speed information including an identifier indicating the fourth device 64.

As shown in the upper section of Fig. 4, the relay device 10 relays travel speed information that is transmitted from the first device 61 and the fourth device 64 toward the second device 62.

As shown in the upper section of Fig. 4, when receiving travel speed information, the second device 62 checks the identifier included in the travel speed information. Then, the second device 62 performs the failure determination on the ECU indicated by the identifier. For example, when receiving travel speed information including the identifier indicating the first device 61, the second device 62 determines that the first device 61 has no failure.

The first device 61 and the fourth device 64 transmit the NM message 50 in the active state while a specified function needs to be implemented. When the second device 62 transmits the NM message 50, the first device 61 and the fourth device 64 continue to be in the active state even when the first device 61 and the fourth device 64 do not transmit the NM message 50.

As described with reference to Fig. 2, when the first device 61 and the fourth device 64 switch from the active state to the standby state, transmission of the NM message 50 from the second device 62 is stopped. More specifically, when there is a possibility that an error may occur in the failure determination as described with reference to Fig. 2, the second device 62 does not transmit the NM message 50.

As shown in the middle section of Fig. 4, the second device 62 stops the failure determination when the second device 62 stops transmitting the NM message 50. That is, when the second device 62 completes to implement the specified function, the second device 62 stops the failure determination.

The second device 62 performs the failure determination on each of the first device 61 and the fourth device 64. In the middle section shown in Fig. 4, the second device 62 stops the failure determination on the first device 61 and the fourth device 64.

Thus, the second device 62 executes a determination method including a step of stopping the failure determination when the second device 62 itself stops transmitting the NM message 50 so that errors in the failure determination are limited.

When the second device 62 stops transmitting the NM message 50 and then resumes periodic transmission of the NM message 50, the first device 61 and the fourth device 64 are in the active state. When an ECU other than the second device 62 transmits the NM message 50 before the second device 62 resumes transmission of the NM message 50, the first device 61 and the fourth device 64 are in the active state based on the NM message 50. In addition, even when an ECU other than the second device 62 does not transmit the NM message 50 before the second device 62 resumes transmission of the NM message 50, the first device 61 and the fourth device 64 are switched to the active state based on the NM message 50 transmitted from the second device 62.

As shown in the lower section of Fig. 4, the second device 62 resumes the failure determination when the second device 62 transmits the NM message 50. More specifically, when the second device 62 stops the failure determination and then resumes periodic transmission of the NM message 50 to implement a specified function, the second device 62 resumes the failure determination.

### Operation of the First Embodiment

When the first device 61 is in the standby state and the second device 62 is in the active state, there is a possibility that the second device 62 erroneously determines that the first device 61 has a failure in the failure determination. At this time, the second device 62 does not transmit the activation notification. When the second device 62 does not transmit the activation notification, the second device 62 does not perform the failure determination.

### Advantages of the First Embodiment

(1-1) The second device 62 limits errors in the failure determination.

(1-2) When the second device 62 stops the failure determination and then transmits the activation notification, the second device 62 resumes the failure determination.

It is desirable that the failure determination be resumed when the first device 61 is switched to the active state. When the second device 62 transmits the activation notification, the first device 61 switches from the standby state to the active state. When resuming transmission of the activation notification, the second device 62 resumes the failure determination. Thus, even when the failure determination is temporarily stopped, the second device 62 detects a failure in the first device 61.

(1-3) The in-vehicle network system 100 includes the fourth device 64 configured to transmit the periodic message as an electronic controller having the network management function in addition to the first device 61, the second device 62, and the third device 63. The second device 62 performs the failure determination on the first device 61 based on the periodic message received from the first device 61. The second device 62 performs the failure determination on the fourth device 64 based on the periodic message received from the fourth device 64. When the second device 62 stops transmitting the activation notification, the second device 62 stops the failure determination on the first device 61 and the fourth device 64.

The second device 62 separately performs the failure determination on each of the electronic controllers. When the second device 62 stops transmitting the activation notification, the second device 62 stops the failure determination performed on each of the electronic controllers. Thus, while performing the failure determination on the electronic controllers, the second device 62 limits errors in the failure determination of the electronic controllers.

(1-4) The second device 62 receives, as the periodic message, information indicating travel speed of the vehicle including the in-vehicle network system 100. This allows the second device 62 to perform the failure determination on the first device 61 based on the information indicating the travel speed of the vehicle.

(1-5) The determination method described above prohibits the second device 62 from performing the failure determination when the second device 62 does not transmit the activation notification. Thus, the determination method limits errors in the failure determination performed by the second device 62.

(1-6) The determination program PD prohibits the second device 62 from performing the failure determination when the second device 62 does not transmit the activation notification. Thus, the determination program PD limits errors in the failure determination performed by the second device 62.

### Second Embodiment

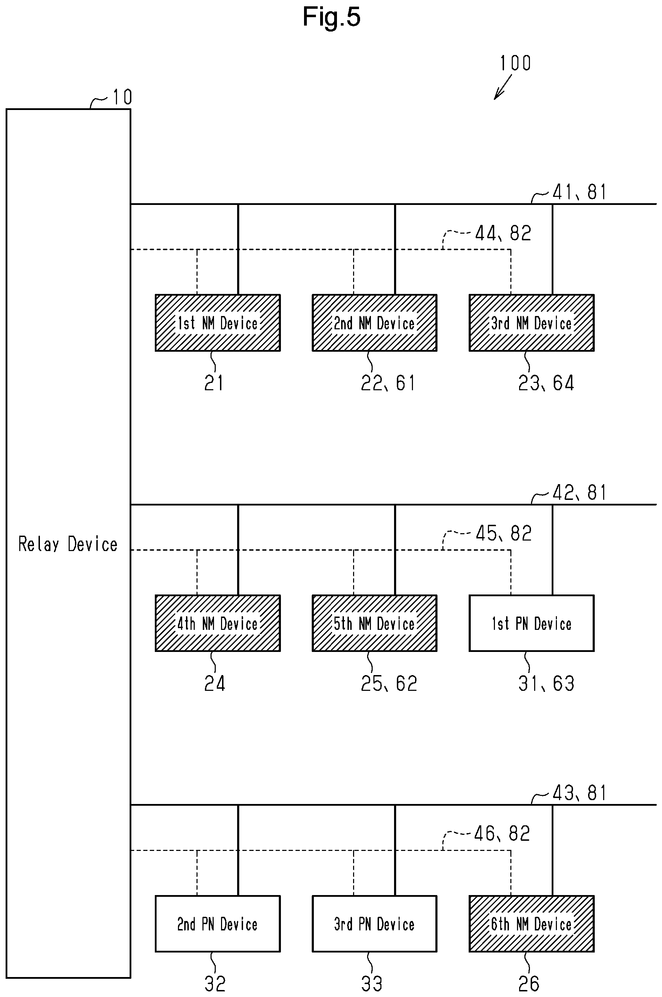

A second embodiment will now be described with reference to Figs. 5 to 7. The second embodiment differs from the first embodiment in that the in-vehicle network system 100 includes a communication bus other than the first communication bus 41, the second communication bus 42, and the third communication bus 43. The description will focus on the differences from the first embodiment. The same points will be briefly described or will not be described.

### Configuration of the In-Vehicle Network System 100

Fig. 5 shows the configuration of an in-vehicle network system 100 in the second embodiment.

As shown in Fig. 5, in the second embodiment, the in-vehicle network system 100 includes a fourth communication bus 44, a fifth communication bus 45, and a sixth communication bus 46 in addition to the first communication bus 41, the second communication bus 42, and the third communication bus 43. The fourth communication bus 44 is connected to the first NM device 21, the second NM device 22, and the third NM device 23. The fifth communication bus 45 is connected to the fourth NM device 24, the fifth NM device 25, and the first PN device 31. The sixth communication bus 46 is connected to the second PN device 32, the third PN device 33, and the sixth NM device 26.

In the in-vehicle network system 100 of the second embodiment, the first NM device 21, the second NM device 22, and the third NM device 23 transmit and receive a message through the fourth communication bus 44 in addition to the first communication bus 41. In the in-vehicle network system 100 of the second embodiment, the fourth NM device 24, the fifth NM device 25, and the first PN device 31 transmit and receive a message through the fifth communication bus 45 in addition to the second communication bus 42. In the in-vehicle network system 100 of the second embodiment, the second PN device 32, the third PN device 33, and the sixth NM device 26 transmit and receive a message through the sixth communication bus 46 in addition to the third communication bus 43.

As shown in Fig. 5, the in-vehicle network system 100 of the second embodiment includes two types of networks formed of the communication buses, namely, a first network 81 and a second network 82.

As shown in Fig. 5, the first network 81 is formed of the first communication bus 41, the second communication bus 42, and the third communication bus 43. The first network 81 groups the first communication bus 41, the second communication bus 42, and the third communication bus 43 included in the in-vehicle network system 100 of the first embodiment. That is, in the same manner as the first embodiment, the first network 81 relays the NM message 50, the PN message 51, and the control message 52 including the periodic message transmitted between the ECUs.

When receiving a message through a communication bus in the first network 81, the relay device 10 transmits the message toward other communication buses in the first network 81. In an example, when the first NM device 21 transmits a message toward the first communication bus 41, the relay device 10 transmits the message toward the second communication bus 42 and the third communication bus 43.

As shown in Fig. 5, the second network 82 is formed of the fourth communication bus 44, the fifth communication bus 45, and the sixth communication bus 46. In the in-vehicle network system 100, the ECUs transmit and receive a message through the second network 82 in addition to the first network 81.

As shown in Fig. 5, the relay device 10 is connected to the fourth communication bus 44, the fifth communication bus 45, and the sixth communication bus 46. When receiving a message through a communication bus in the second network 82, the relay device 10 transmits the message toward other communication buses in the second network 82. In an example, when the first NM device 21 transmits a message toward the fourth communication bus 44, the relay device 10 transmits the message toward the fifth communication bus 45 and the sixth communication bus 46.

### Configuration of the Second Device 62

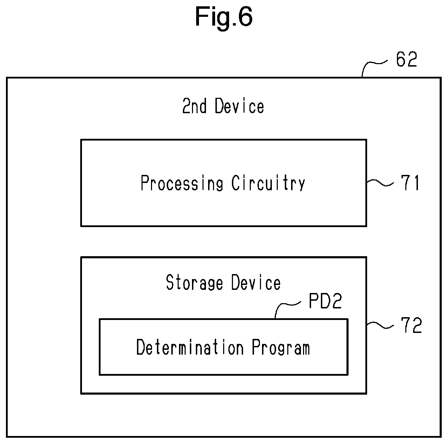

Fig. 6 shows the configuration of the second device 62 in the in-vehicle network system 100 of the second embodiment.

In a comparison of Figs. 3 and 6, the second device 62 stores the determination program PD2 in the storage device 72 instead of the determination program PD. The determination program PD2, when executed by the processing circuitry 71, causes the processing circuitry 71 to execute and stop the failure determination. When the processing circuitry 71 executes the determination program PD2, the second device 62 limits errors in the failure determination.

### Communication Performed in the In-Vehicle Network System 100

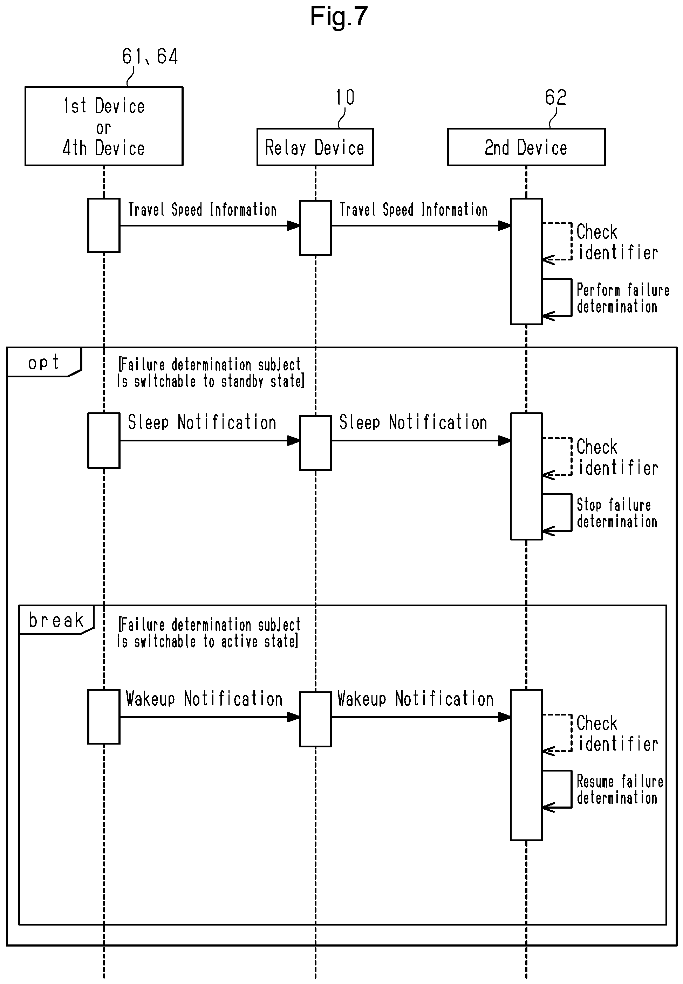

Fig. 7 shows communication performed by the second device 62, the relay device 10, and one of the first device 61 and the fourth device 64 in the in-vehicle network system 100 of the second embodiment for the failure determination performed by the second device 62. The second device 62 and the relay device 10 perform communication with the ECU of the first device 61 and the ECU of the fourth device 64 in the manner shown in Fig. 7 instead of the manner shown in Fig. 4. When the processing circuitry 71 executes the determination program PD2, the second device 62 executes the processes of the second device 62 shown in Fig. 7.

As shown in the upper section of Fig. 7, while being in the active state, the first device 61 and the fourth device 64 transmit travel speed information as the periodic message. The first device 61 and the fourth device 64 transmits the travel speed information through the first network 81. The travel speed information includes an identifier in the same manner as that of Fig. 4.

As shown in the upper section of Fig. 7, the relay device 10 relays travel speed information that is transmitted from the first device 61 and the fourth device 64 toward the second device 62.

As shown in the upper section of Fig. 7, when receiving travel speed information, the second device 62 checks the identifier included in the travel speed information. Then, the second device 62 performs the failure determination on the ECU indicated by the identifier. This process is the same as the process executed by the second device 62 shown in the upper section of Fig. 4.

The middle section of Fig. 7 shows communication performed when a subject of the failure determination is switchable to the standby state. The subject of the failure determination refers to the first device 61 and the fourth device 64.

As described above, when an ECU in the in-vehicle network system 100 does not receive the activation notification for a fixed length of time or longer, the ECU switches from the active state to the standby state.

When the first device 61 does not receive the activation notification from another ECU for the fixed length of time or longer, the first device 61 transmits a sleep notification toward the second device 62. The sleep notification is a signal indicating that the ECU that transmitted the notification switches from the active state to the standby state. The first device 61 transmits the sleep notification including an identifier that is information for identifying the ECU from which the notification is originated. That is, the first device 61 transmits a sleep notification including an identifier indicating the first device 61.

The first device 61 transmits the sleep notification through the second network 82. More specifically, the first device 61 transmits the sleep notification toward the fourth communication bus 44. The second device 62 receives the sleep notification through the fifth communication bus 45.

After transmitting the sleep notification, the first device 61 switches from the active state to the standby state.

When the fourth device 64 does not receive the activation notification from another ECU for the fixed length of time or longer, the fourth device 64 transmits a sleep notification toward the second device 62. The fourth device 64 transmits a sleep notification including an identifier indicating the fourth device 64.

The fourth device 64 transmits the sleep notification through the second network 82. More specifically, the fourth device 64 transmits the sleep notification toward the fourth communication bus 44. The second device 62 receives the sleep notification through the fifth communication bus 45.

After transmitting the sleep notification, the fourth device 64 switches from the active state to the standby state.

As shown in the upper section of Fig. 7, the relay device 10 relays the sleep notifications transmitted from the first device 61 and the fourth device 64 toward the second device 62.

As shown in the upper section of Fig. 7, when receiving a sleep notification, the second device 62 checks the identifier included in the sleep notification. The second device 62 detects that the ECU indicated by the identifier is switched to the standby state. More specifically, when the identifier of the sleep notification indicates the first device 61, the second device 62 detects that the first device 61 is switched from the active state to the standby state. When the identifier of the sleep notification indicates the fourth device 64, the second device 62 detects that the fourth device 64 is switched from the active state to the standby state.

As shown in the middle section of Fig. 7, the second device 62 stops the failure determination performed on the ECU that has switched from the active state to the standby state. For example, when the second device 62 detects that the first device 61 has switched from the active state to the standby state, the second device 62 stops the failure determination performed on the first device 61.

Thus, to limit errors in the failure determination, the second device 62 executes a determination method including a step of stopping the failure determination when the second device 62 detects that the subject of the failure determination is switched to the standby state through communication in the second network 82.

The lower section of Fig. 7 shows communication performed when the subject of the failure determination is switchable to the active state.

When the first device 61 is switched from the standby state to the active state, the first device 61 transmits a wakeup notification toward the second device 62. The wakeup notification is a signal indicating that the ECU that transmitted the notification switches from the standby state to the active state. The first device 61 transmits the wakeup notification including an identifier that is information for identifying the ECU from which the notification is transmitted. That is, the first device 61 transmits a wakeup notification including an identifier indicating the first device 61.

The first device 61 transmits the wakeup notification through the second network 82. More specifically, the first device 61 transmits the wakeup notification toward the fourth communication bus 44. The second device 62 receives the wakeup notification through the fifth communication bus 45.

When the fourth device 64 is switched from the standby state to the active state, the fourth device 64 transmits a wakeup notification toward the second device 62. The fourth device 64 transmits a wakeup notification including an identifier indicating the fourth device 64.

The fourth device 64 transmits the wakeup notification through the second network 82. More specifically, the fourth device 64 transmits the wakeup notification toward the fourth communication bus 44. The second device 62 receives the wakeup notification through the fifth communication bus 45.

As shown in the lower section of Fig. 7, the relay device 10 relays the wakeup notifications transmitted from the first device 61 and the fourth device 64 toward the second device 62.

As shown in the lower section of Fig. 7, when receiving a wakeup notification, the second device 62 checks the identifier included in the wakeup notification. The second device 62 detects that the ECU indicated by the identifier is switched to the active state. More specifically, when the identifier of the wakeup notification indicates the first device 61, the second device 62 detects that the first device 61 is switched from the standby state to the active state. When the identifier of the wakeup notification indicates the fourth device 64, the second device 62 detects that the fourth device 64 is switched from the standby state to the active state.

As shown in the lower section of Fig. 7, the second device 62 resumes the failure determination performed on the ECU that has switched from the standby state to the active state. For example, when the second device 62 detects that the first device 61 has switched from the standby state to the active state, the second device 62 resumes the failure determination performed on the first device 61.

### Operation and Advantages of the Second Embodiment

(2-1) When the second device 62 detects that the first device 61 is switched to the standby state through the second network 82, the second device 62 stops the failure determination. Thus, the second device 62 limits errors in the failure determination.

(2-2) After stopping the failure determination, when the second device 62 detects that the first device 61 is switched to the active state based on communication with the first device 61 through the second network 82, the second device 62 resumes the failure determination.

It is desirable that the failure determination be resumed when the first device 61 is switched to the active state. When the second device 62 detects that the first device 61 is switched to the active state through the second network 82, the second device 62 resumes the failure determination. Thus, even when the failure determination is temporarily stopped, the second device 62 detects a failure in the first device 61.

(2-3) The in-vehicle network system 100 includes the fourth device 64 as an electronic controller having the network management function in addition to the first device 61, the second device 62, and the third device 63. The fourth device 64 is connected to the second device 62 through the first network 81 and the second network 82 and transmits the periodic message through the first network 81. The second device 62 performs the failure determination on the first device 61 based on the periodic message received from the first device 61. The second device 62 performs the failure determination on the fourth device 64 based on the periodic message received from the fourth device 64. When the second device 62 detects that the first device 61 is switched to the standby state based on communication with the first device 61 through the second network 82, the second device 62 stops the failure determination performed on the first device 61. When the second device 62 detects that the fourth device 64 is switched to the standby state based on communication with the fourth device 64 through the second network 82, the second device 62 stops the failure determination performed on the fourth device 64.

The second device 62 separately performs the failure determination on each of the electronic controllers. When the second device 62 detects that the electronic controller subject to the failure determination is switched to the standby state through the second network 82, the second device 62 stops the failure determination performed on the electronic controller that has been switched to the standby state. Thus, while performing the failure determination on the electronic controllers, the second device 62 limits errors in the failure determination of the electronic controllers.

(2-4) The second device 62 of the second embodiment has the advantage (1-4) of the first embodiment.

(2-5) The determination method described above stops the failure determination performed by the second device 62 when the second device 62 detects that the first device 61 is switched to the standby state through the second network 82. Thus, the determination method limits errors in the failure determination performed by the second device 62.

(2-6) The determination program PD2 described above stops the failure determination performed by the second device 62 when the second device 62 detects that the first device 61 is switched to the standby state through the second network 82. Thus, the determination program PD2 limits errors in the failure determination performed by the second device 62.

### Third Embodiment

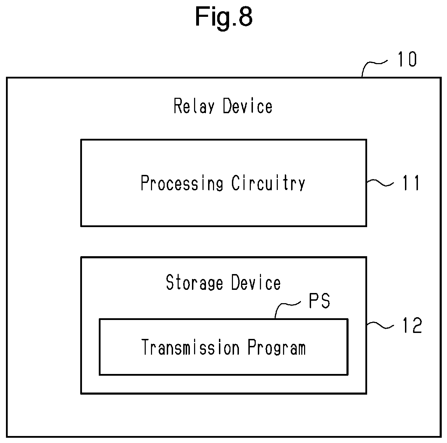

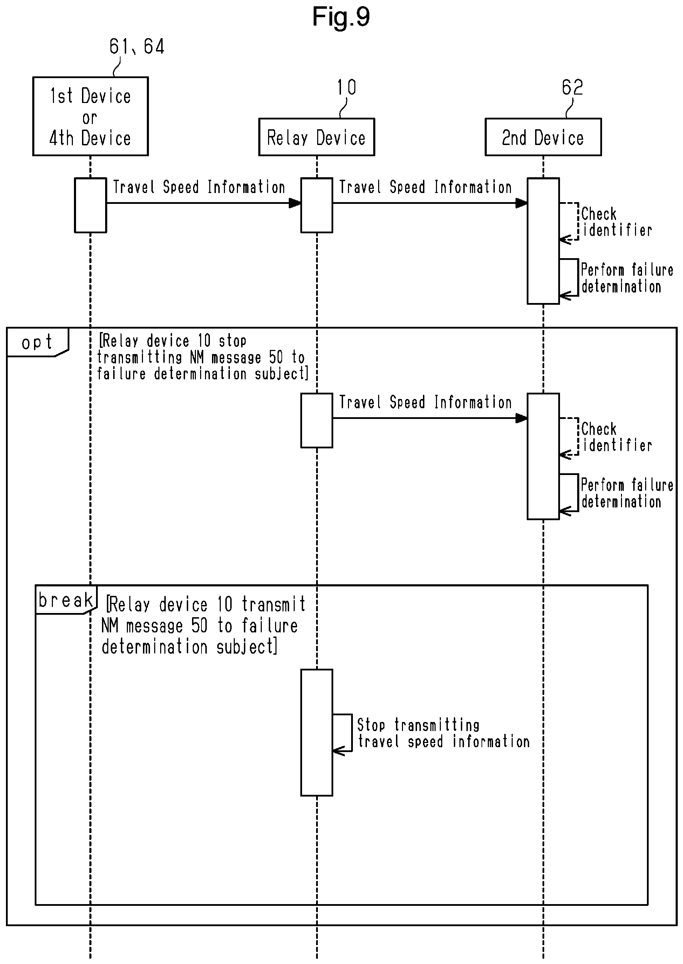

A third embodiment will now be described with reference to Figs. 8 and 9. The third embodiment differs from the first embodiment in that the relay device 10 executes a process for stopping the failure determination. The description will focus on the differences from the first embodiment. The same points will be briefly described or will not be described.

### Configuration of the Relay Device 10

Fig. 8 shows the configuration of the relay device 10 in the in-vehicle network system 100 of the third embodiment. As shown in Fig. 8, the relay device 10 includes processing circuitry 11 and a storage device 12.

The processing circuitry 11 executes programs stored in the storage device 12 to execute various processes. The processing circuitry 11 includes a processor.

As shown in Fig. 8, the storage device 12 stores a transmission program PS. The transmission program PS, when executed by the processing circuitry 11, causes the processing circuitry 11 to transmit the periodic message.

In the in-vehicle network system 100 of the third embodiment, the processing circuitry 11 of the relay device 10 executes the transmission program PS to limit errors in the failure determination performed by the second device 62. In the in-vehicle network system 100 of the third embodiment, the second device 62 does not necessarily have to store the determination program PD.

### Communication Performed in the In-Vehicle Network System 100

Fig. 9 shows communication performed by the second device 62, the relay device 10, and one of the first device 61 and the fourth device 64 in the in-vehicle network system 100 of the third embodiment for the failure determination performed by the second device 62. The second device 62 and the relay device 10 perform communication with the ECU of the first device 61 and the ECU of the fourth device 64 in the manner shown in Fig. 9 instead of the manner shown in Fig. 4. When the processing circuitry 11 executes the transmission program PS, the relay device 10 executes the processes of the relay device 10 shown in Fig. 9.

As shown in the upper section of Fig. 9, while being in the active state, the first device 61 and the fourth device 64 transmit travel speed information as the periodic message toward the second device 62. This process is the same as the process executed by the first device 61 and the fourth device 64 shown in the upper section of Fig. 9.

As shown in the upper section of Fig. 9, the relay device 10 relays travel speed information that is transmitted from the first device 61 and the fourth device 64 toward the second device 62.

As shown in the upper section of Fig. 9, when receiving travel speed information, the second device 62 checks the identifier included in the travel speed information. Then, the second device 62 performs the failure determination on the ECU indicated by the identifier. This process is the same as the process executed by the second device 62 shown in the upper section of Fig. 4.

The middle section of Fig. 9 shows communication performed when the relay device 10 stops transmitting the NM message 50 to a subject of the failure determination. The subject of the failure determination refers to the first device 61 and the fourth device 64.

As described above, while receiving an NM message 50 from another ECU, the relay device 10 relays the NM message 50 and also transmits its own NM message 50 toward a communication bus that is connected to an ECU that does not have the PN function. Thus, when the relay device 10 does not transmit the NM message 50, no NM message 50 is transmitted in the in-vehicle network system 100.

When the relay device 10 does not transmit the NM message 50, the first device 61 and the fourth device 64 do not receive the NM message 50 and thus are switched from the active state to the standby state. Thus, the communication shown in the middle section of Fig. 9 is performed when the first device 61 and the fourth device 64 are switched from the active state to the standby state.

When the relay device 10 stops transmitting the NM message 50 to the subject of the failure determination, the relay device 10 determines that the first device 61 is switched from the active state to the standby state based on the stopping of transmission of the NM message 50 toward the first communication bus 41. When the relay device 10 determines that the first device 61 is switched from the active state to the standby state, the relay device 10 transmits travel speed information, which is the periodic message, to the second device 62 shown in the middle section of Fig. 9. In this case, the relay device 10 transmits travel speed information including an identifier indicating the first device 61.

When the relay device 10 stops transmitting the NM message 50 to the subject of the failure determination, the relay device 10 determines that the fourth device 64 is switched from the active state to the standby state based on the stopping of transmission of the NM message 50 toward the first communication bus 41. When the relay device 10 determines that the fourth device 64 is switched from the active state to the standby state, the relay device 10 transmits travel speed information, which is the periodic message, to the second device 62 shown in the middle section of Fig. 9. In this case, the relay device 10 transmits travel speed information including an identifier indicating the fourth device 64.

As shown in the upper section of Fig. 9, when receiving travel speed information, the second device 62 checks the identifier included in the travel speed information. Then, the second device 62 performs the failure determination on the ECU indicated by the identifier. More specifically, when the relay device 10 transmits travel speed information with the identifier indicating the first device 61, the second device 62 performs the failure determination on the first device 61. When the relay device 10 transmits travel speed information with the identifier indicating the fourth device 64, the second device 62 performs the failure determination on the fourth device 64.

As described above, when the ECU subject to the failure determination is switched to the standby state, the relay device 10, instead of the ECU switched to the standby state, transmits the periodic message toward the second device 62. Even when the ECU subject to the failure determination is switched to the standby state, the second device 62 performs the failure determination based on the periodic message received from the relay device 10.

After the relay device 10 stops transmitting the NM message 50, the in-vehicle network system 100 periodically performs communication in the manner shown in the middle section of Fig. 9 until the process in the lower section of Fig. 9 is executed. More specifically, after stopping transmitting the NM message 50, the relay device 10 periodically transmits travel speed information until the process in the lower section of Fig. 9 is executed. The second device 62 performs the failure determination based on travel speed information transmitted from the relay device 10 until the process shown in the lower section of Fig. 9 is executed.

Thus, the relay device 10 executes a determination method including a step of transmitting the periodic message, instead of the subject of the failure determination switched to the standby state, so that errors in the failure determination performed by the second device 62 are limited.

The lower section of Fig. 9 shows communication performed when the relay device 10 transmits the NM message 50 to the subject of the failure determination.

When the relay device 10 transmits the NM message 50 to the subject of the failure determination, the subject of the failure determination is switched from the standby state to the active state. Thus, the communication shown in the lower section of Fig. 9 is executed when the first device 61 and the fourth device 64 are switched from the active state to the standby state.

As shown in the lower section of Fig. 9, the relay device 10 stops the periodic transmission of travel speed information. In the lower section of Fig. 9, the subject of the failure determination is switched from the standby state to the active state. Even when the relay device 10 stops transmitting travel speed information, the subject of the failure determination is switched to the active state and resumes the transmission of travel speed information. Thus, the second device 62 performs the failure determination normally.

### Operation and Advantages of the Third Embodiment

(3-1) When the first device 61 is switched to the standby state, instead of the first device 61, the relay device 10 transmits the periodic message. Thus, the relay device 10 limits errors in the failure determination performed by the second device 62.

(3-2) While an electronic controller is transmitting an activation notification toward the first device 61, the relay device 10 relays the activation notification and also periodically transmits its own activation notification toward the first device 61. When the electronic controller stops transmitting an activation notification toward the first device 61, the relay device 10 determines that the first device 61 is switched to the standby state and transmits the periodic message toward the second device 62.

When the first device 61 is switched to the standby state, instead of the first device 61, the relay device 10 transmits the periodic message. Thus, the relay device 10 limits errors in the failure determination performed by the second device 62.

(3-3) When the relay device 10 starts to transmit the periodic message and then transmits the activation notification to the first device 61, the relay device 10 stops transmitting the periodic message to the second device 62.

When switched to the active state, the first device 61 resumes transmitting the periodic message toward the second device 62. Thus, when the first device 61 is switched to the active state, the relay device 10 no longer needs to transmit the periodic message instead of the first device 61.

When the relay device 10 transmits the activation notification to the first device 61, the first device 61 is switched to the active state. When the relay device 10 transmits the activation notification to the first device 61, the relay device 10 stops transmitting the periodic message. Thus, the relay device 10 reduces the amount of communication in the in-vehicle network system 100.

(3-4) The in-vehicle network system 100 includes the fourth device 64 configured to transmit the periodic message as an electronic controller having the network management function in addition to the first device 61, the second device 62, and the third device 63. In the in-vehicle network system 100, the relay device 10 is an electronic controller differing from the first device 61, the second device 62, and the fourth device 64. The second device 62 performs the failure determination on the first device 61 based on the periodic message received from the first device 61. The second device 62 performs the failure determination on the fourth device 64 based on the periodic message received from the fourth device 64. When the first device 61 is switched to the standby state, instead of the first device 61, the relay device 10 transmits the periodic message for the failure determination on the first device 61 toward the second device 62. When the fourth device 64 is switched to the standby state, instead of the fourth device 64, the relay device 10 transmits the periodic message for the failure determination on the fourth device 64 toward the second device 62.

When an electronic controller subject to the failure determination is switched to the standby state, the relay device 10 transmits the periodic message instead of the electronic controller switched to the standby state. Thus, while allowing the second device 62 to perform the failure determinations on multiple electronic controllers, the relay device 10 limits errors in the failure determinations performed by the second device 62.

(3-5) The first device 61 transmits, as the periodic message, information indicating travel speed of the vehicle including the in-vehicle network system 100. When the first device 61 is switched to the standby state, the relay device 10 transmits a message including information indicating travel speed of the periodic message toward the second device 62.

When the first device 61 is switched to the standby state, instead of the first device 61, the relay device 10 transmits information indicating travel speed of the vehicle toward the second device 62. Therefore, even when the first device 61 is switched to the standby state, the relay device 10 allows the second device 62 to perform the failure determination based on information indicating travel speed of the vehicle.

(3-6) The transmission method described above causes the relay device 10 to transmit the periodic message for the first device 61 when the first device 61 is switched to the standby state. Thus, the transmission method limits errors in the failure determination performed by the second device 62.

(3-7) The transmission program PS described above causes the relay device 10, which is an electronic controller differing from the first device 61 and the second device 62, to transmit the periodic message instead of the first device 61 when the first device 61 is switched to the standby state. Thus, the transmission program PS limits errors in the failure determination performed by the second device 62.

### Other Embodiments

The above embodiments may be modified as described below. The embodiments and the following modified examples can be combined as long as the combined modified examples remain technically consistent with each other.

### Configuration of the In-Vehicle Network System 100

In the in-vehicle network system 100, the relay device 10 transmits the PN message 51, which is transmitted from an ECU having the PN function, to a communication bus that is connected to another ECU having the PN function. The relay device 10 also transmits an NM message 50, which is transmitted from an ECU that does not have the PN function, to a communication bus that is connected to another ECU that does not have the PN function.

Alternatively, the relay device 10 may be configured to transmit the activation notification to all of the communication buses connected to the relay device 10 and, only when an ECU connected to particular one or ones of the communication buses is switched to the standby state, the relay device 10 may be configured not to transmit the activation notification to the particular communication bus.

As long as the in-vehicle network system 100 includes the first communication bus 41 including the first device 61, the second communication bus 42 including the second device 62 and the third device 63, and the relay device 10, the number of communication buses and the number of ECUs connected to each communication bus are not limited to those of the embodiments. The topology of the in-vehicle network system 100 is also not limited to those of the embodiments.

In the in-vehicle network system 100, an ECU having the PN function is not connected to the first communication bus 41. Alternatively, in the in-vehicle network system 100, an ECU having the PN function may be connected to the first communication bus 41 connected to the first device 61.

When receiving a PN message 51 from another ECU, the relay device 10 may be configured to check the destination of the PN message 51 and transmit the PN message 51 to only the communication bus that the destination ECU is connected to. In this configuration, even when an ECU having the PN function is connected to the first communication bus 41, the activation notification may not be transmitted to the first communication bus 41, and the activation notification may be transmitted to the second communication bus 42.

The in-vehicle network system 100 includes the first device 61 and the fourth device 64 as the ECUs configured to transmit the periodic message. The in-vehicle network system 100 does not necessarily have to include the fourth device 64.

In the in-vehicle network system 100, the first device 61 and the fourth device 64 may transmit the periodic message without including an identifier. In this configuration, the second device 62 performs the failure determination without checking an identifier included in the message. When reception of the periodic message is stopped, the second device 62 determines that one of the first device 61 and the fourth device 64 has a failure.

In the in-vehicle network system 100, the second device 62 separately performs the failure determination on each of the first device 61 and the fourth device 64. The second device 62 does not necessarily have to separately perform the failure determination on each of the first device 61 and the fourth device 64. In this configuration, when reception of the periodic message is stopped, the second device 62 determines that one of the first device 61 and the fourth device 64 has a failure.

In the embodiments, the first device 61 and the fourth device 64 transmit travel speed information as the periodic message. The message that the first device 61 and the fourth device 64 transmit as the periodic message does not necessarily have to be travel speed information. In an example, the first device 61 and the fourth device 64 may transmit a message indicating the rotation speed of the engine of the vehicle as the periodic message. In an example, the first device 61 and the fourth device 64 may transmit, as the periodic message, a message indicating that messages are transmitted from the first device 61 and the fourth device 64 normally.

As shown in Fig. 5, the in-vehicle network system 100 of the second embodiment include communication buses forming the second network 82. The relay device 10 connects the communication buses. The configuration of the second network 82 is not limited to that shown in Fig. 5.

In an example, the second network 82 may be formed of a single communication bus that directly connects the first device 61, the second device 62, and the fourth device 64 without using the relay device 10. For example, the second network 82 may be formed of a communication bus that directly connects the first device 61 and the second device 62 and a communication bus that directly connects the second device 62 and the fourth device 64.

### Communication Shown in Fig. 4

As shown in Fig. 4, in the first embodiment, when the failure determination is stopped and then the NM message 50 is transmitted, the second device 62 resumes the failure determination. Alternatively, even when the failure determination is stopped and then the NM message 50 is transmitted, the second device 62 may be configured not to resume the failure determination.

In the first embodiment, the subjects of the failure determination performed by the second device 62 are the first device 61 and the fourth device 64. Alternatively, for example, the second device 62 may perform the failure determination on three or more ECUs. In this case, when stopping transmission of the NM message 50, the second device 62 stops the failure determination on all of the subjects of the failure determination.

In the first embodiment, the fourth device 64 is the third NM device 23. The third NM device 23 and the first device 61 are both connected to the first communication bus 41. The fourth device 64 may be another ECU connected to a communication bus that differs from that of the first device 61. For example, the fourth device 64 may be the fourth NM device 24 and the sixth NM device 26. Even in this case, when stopping transmission of the NM message 50, the second device 62 stops the failure determination on all of the subjects of the failure determination.

In the first embodiment, when stopping the failure determination, the second device 62 stops the failure determination on both the first device 61 and the fourth device 64. Alternatively, when stopping the failure determination, the second device 62 may stop the failure determination on the ECU of only one of the first device 61 and the fourth device 64. That is, when stopping the failure determination, the second device 62 does not necessarily have to stop the failure determination on all of the ECUs subject to the failure determination. This configuration limits errors in the failure determination on ECUs on which the failure determination is stopped.

### Communication Shown in Fig. 7

As shown in Fig. 7, when the subject of the failure determination is switched to the active state, the second device 62 of the second embodiment resumes the failure determination. The second device 62 may be configured not to resume the failure determination even when the failure determination is stopped and then the subject to the failure determination is switched to the active state.

As shown in Fig. 7, in the second embodiment, when the second device 62 receives a sleep notification from the subject of the failure determination through the second network 82, the second device 62 stops the failure determination. The configuration in which the second device 62 stops the failure determination based on communication through the second network 82 is not limited to that of the second embodiment. For example, while the subject of the failure determination is in the active state, the second device 62 periodically transmits a message indicating that the second device 62 is in the active state through the second network 82. Then, when the second device 62 does not receive the message from the subject of the failure determination for a fixed length of time or longer, the second device 62 may be configured to stop the failure determination on the ECU that has stopped transmitting the message.

As shown in Fig. 7, in the second embodiment, when the second device 62 receives a wakeup notification from the subject of the failure determination through the second network 82, the second device 62 resumes the failure determination. The configuration in which the second device 62 resumes the failure determination based on communication through the second network 82 is not limited to that of the second embodiment. For example, while the subject of the failure determination is in the active state, the second device 62 periodically transmits a message indicating that the second device 62 is in the active state through the second network 82. When the subject of the failure determination resumes the periodic transmission of the message, the second device 62 may resume the failure determination on the ECU.

As shown in Fig. 7, in the second embodiment, when the second device 62 receives a sleep notification, the second device 62 stops the failure determination on the ECU indicated by the identifier of the sleep notification. Alternatively, when the second device 62 receives a sleep notification, the second device 62 may stop the failure determination on all of the ECUs subject to the failure determination. In this case, the subject to the failure determination does not necessarily have to provide the sleep notification with the identifier.

As shown in Fig. 7, in the second embodiment, when the second device 62 receives a wakeup notification, the second device 62 resumes the failure determination on the ECU indicated by the identifier of the wakeup notification. Alternatively, when the second device 62 receives a wakeup notification, the second device 62 may resume the failure determination on all of the ECUs subject to the failure determination. In this case, the subject to the failure determination does not necessarily have to provide the wakeup notification with the identifier.

In the second embodiment, the subjects of the failure determination performed by the second device 62 are the first device 61 and the fourth device 64. Alternatively, for example, the second device 62 may perform the failure determination on three or more ECUs. In this case, the second device 62 separately perform the failure determination on each subject based on the identifier included in a periodic message. The second device 62 separately stops and resumes the failure determination on multiple ECUs based on the identifier of a message received through the second network 82.

In the second embodiment, the fourth device 64 is the third NM device 23. The third NM device 23 and the first device 61 are both connected to the first communication bus 41. The fourth device 64 may be another ECU connected to a communication bus that differs from that of the first device 61. For example, the fourth device 64 may be the fourth NM device 24 and the sixth NM device 26. In such a case, the second device 62 separately stops and resumes the failure determination on each ECU based on communication through the second network 82.

As shown in Fig. 7, in the second embodiment, when the second device 62 receives a wakeup notification from the subject of the failure determination, the second device 62 resumes the failure determination. That is, in the second embodiment, the second device 62 resumes the failure determination based on communication through the second network 82. The configuration in which the second device 62 resumes the failure determination is not limited to that of the second embodiment.

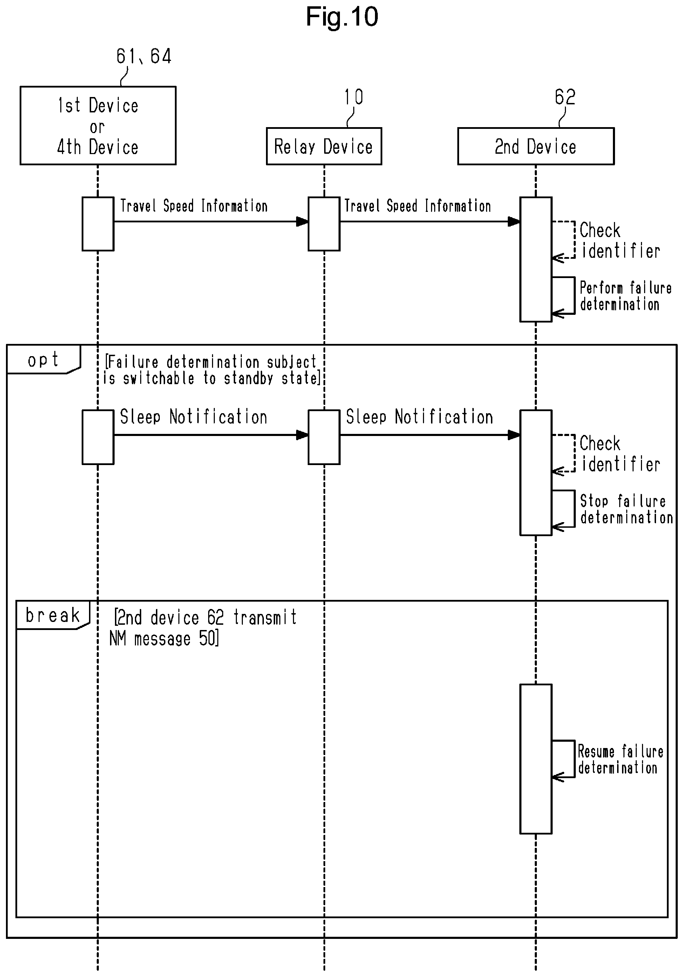

For example, the second device 62 may resume the failure determination when transmitting the NM message 50. When this modified example is applied, Fig. 10 shows communication performed by the second device 62, the relay device 10, and one of the first device 61 and the fourth device 64 for the failure determination performed by the second device 62. In this modified example, which is a modified example of the second embodiment, the second device 62 and the relay device 10 perform communication with the ECU of the first device 61 and the ECU of the fourth device 64 in the manner shown in Fig. 10 instead of the manner shown in Fig. 7. When the processing circuitry 71 executes the determination program PD2, the second device 62 executes the processes of the second device 62 shown in Fig. 10.

The communication performed in the upper section of Fig. 10 is the same as that shown in the upper section of Fig. 7. In the upper section of Fig. 10, the first device 61 or the fourth device 64 transmits travel speed information as the periodic message. As shown in the upper section of Fig. 10, the relay device 10 relays travel speed information that is transmitted from the first device 61 and the fourth device 64 toward the second device 62. In the upper section of Fig. 10, the second device 62 performs the failure determination based on the identifier included in the periodic message.

The communication performed in the middle section of Fig. 10 is the same as that shown in the middle section of Fig. 7. In the middle section of Fig. 10, when the first device 61 or the fourth device 64 is switchable to the standby state, the first device 61 or the fourth device 64 transmits a sleep notification through the second network 82. As shown in the middle section of Fig. 10, the relay device 10 relays the sleep notifications transmitted from the first device 61 and the fourth device 64 toward the second device 62. In the middle section of Fig. 10, the second device 62 stops the failure determination based on the identifier included in the sleep notification.

The lower section of Fig. 10 shows communication performed when the second device 62 transmits the NM message 50.

In the middle section shown in Fig. 10, the first device 61 and the fourth device 64 are switchable to the standby state. Thus, in the middle section shown in Fig. 10, the second device 62 does not transmit the NM message 50. When the second device 62 stops transmitting the NM message 50 and then resumes periodic transmission of the NM message 50, the first device 61 and the fourth device 64 are in the active state. When an ECU other than the second device 62 transmits the NM message 50 before the second device 62 resumes transmission of the NM message 50, the first device 61 and the fourth device 64 are in the active state based on the NM message 50. In addition, even when an ECU other than the second device 62 does not transmit the NM message 50 before the second device 62 resumes transmission of the NM message 50, the first device 61 and the fourth device 64 are switched to the active state based on the NM message 50 transmitted from the second device 62.

As shown in the lower section of Fig. 10, when the second device 62 transmits the NM message 50, the second device 62 resumes the failure determination. More specifically, the second device 62 separately resumes the failure determination on the first device 61 and the fourth device 64. Thus, even when the second device 62 stops the failure determination, the failure determination may be resumed when the first device 61 and the fourth device 64 are switched to the active state.

In this configuration, when the second device 62 stops the failure determination and then transmits the activation notification, the second device 62 resumes the failure determination.

It is desirable that the failure determination be resumed when the first device 61 is switched to the active state. When the second device 62 transmits the activation notification, the first device 61 switches to the active state. When the second device 62 transmits the activation notification, the second device 62 resumes the failure determination. Thus, even when the failure determination is temporarily stopped, the second device 62 detects a failure in the first device 61.

### Communication Shown in Fig. 9

As shown in Fig. 9, in the in-vehicle network system 100 of the third embodiment, instead of a subject of the failure determination, the relay device 10 transmits the periodic message. The ECU transmitting the periodic message instead of the subject of the failure determination does not necessarily have to be the relay device 10. In an example, when the in-vehicle network system 100 has the configuration including the second network 82 as shown in Fig. 5, the fourth NM device 24 may transmit the periodic message instead of the subject of the failure determination. In this configuration, for example, when the fourth NM device 24 detects that a subject of the failure determination is switched to the standby state based on communication through the second network 82, the fourth NM device 24 may transmit the periodic message instead of the subject of the failure determination. When the fourth device 64 detects that a subject of the failure determination is switched to the active state based on communication through the second network 82, the fourth device 64 may stop the periodic transmission of the periodic message.

As shown in Fig. 9, in the third embodiment, when the relay device 10 stops the failure determination and then transmits the NM message 50 to the subject of the failure determination, the relay device 10 stops transmitting travel speed information. Alternatively, even when transmitting the NM message 50, the relay device 10 may be configured not to stop transmitting travel speed information.

In the third embodiment, the subjects of the failure determination performed by the second device 62 are the first device 61 and the fourth device 64. Alternatively, for example, the second device 62 may perform the failure determination on three or more ECUs. With this configuration, instead of each ECU switched to the active state, the relay device 10 transmits the periodic message.

In the third embodiment, the fourth device 64 is the third NM device 23. The third NM device 23 and the first device 61 are both connected to the first communication bus 41. The fourth device 64 may be another ECU connected to a communication bus that differs from that of the first device 61. For example, the fourth device 64 may be the fourth NM device 24 and the sixth NM device 26. With this configuration, when the fourth device 64 is switched to the standby state, instead of the fourth device 64, the relay device 10 also transmits the periodic message.

As shown in Fig. 9, in the third embodiment, the relay device 10 transmits, as the periodic message, travel speed information that is transmitted by the subject of the failure determination. Even when the subject of the failure determination transmits travel speed information as the periodic message, the relay device 10 may be configured to transmit a message other than the travel speed information as the periodic message.

As shown in Fig. 9, in the third embodiment, when stopping transmission of the NM message 50 to a subject of the failure determination, the relay device 10 determines that the subject of the failure determination is switched to the standby state and thus transmits the periodic message. The relay device 10 may determine that the subject of the failure determination is switched to the standby state on a basis other than those of the embodiments. In an example, when the in-vehicle network system 100 includes the second network 82, the relay device 10 may determine that the subject of the failure determination is switched to the standby state based on communication through the second network 82.

In the third embodiment, instead of each of the first device 61 and the fourth device 64, the relay device 10 transmits a periodic message. Instead of separately transmitting a periodic message corresponding to each subject of the failure determination, the relay device 10 may be configured to periodically transmit a single message that includes the identifiers of all of the subjects of the failure determination instead of the periodic messages transmitted by each of the ECUs. More specifically, the relay device 10 may periodically transmit a single message including the identifier of the first device 61 and the identifier of the fourth device 64.

The electronic controller may include a central processing unit (CPU), random access memory (RAM), and read only memory (ROM). The electronic controller executes a software process. However, this is merely exemplary. In an example, the electronic controller may include a dedicated hardware circuit executing at least part of the software process executed in each of the embodiments described above. The dedicated hardware circuit is, for example, an application specific integrated circuit (ASIC). The electronic controller may have any one of the following configurations (a) to (c). (a) The electronic controller includes a processor that executes all processes according to programs and a program storage device such as ROM that stores the programs. That is, the electronic controller includes a software execution device. (b) The electronic controller includes a processor that executes part of the processes according to programs and a program storage device. The electronic controller further includes a dedicated hardware circuit that executes the rest of the processes. (c) The electronic controller includes a dedicated hardware circuit that executes all processes. Multiple software execution devices and/or multiple dedicated hardware circuits may be provided. That is, the processes may be executed by processing circuitry including at least one of a software execution device and a dedicated hardware circuit. The processing circuitry may include multiple software execution devices and multiple dedicated hardware circuits. The program storage device, or a computer readable storage medium, includes any type of storage device that is a medium accessible by a versatile computer or a dedicated computer. The programs may be stored in a computer readable nonvolatile data storage medium such as CD-ROM and may be distributed as a program product. The programs may be provided as a downloadable program product by an information provider connected to a network such as the Internet.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electronic controller that is included in an in-vehicle network system (100) and has a network management function, wherein
the network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification,
the in-vehicle network system (100) includes
a first device (61) having the network management function and configured to transmit a periodic message, the periodic message being periodically transmitted,
a second device (62) having the network management function and configured to execute a failure determination that determines that the first device (61) has a failure when reception of the periodic message from the first device (61) is stopped,
a third device (63) having the network management function and a partial network function such that when receiving the activation notification and a destination of the activation notification differs from the third device (63), the third device (63) does not switch from the standby state to the active state,
a first communication bus (41) connected to the first device (61),
a second communication bus (42) connected to the second device (62) and the third device (63), and
a relay device (10) connected to the first communication bus (41) and the second communication bus (42) and configured to electronically relay a message among communication buses,
the electronic controller is the second device (62), and
the electronic controller is configured to stop the failure determination when stopping transmission of the activation notification.

2. The electronic controller according to claim 1, wherein after stopping the failure determination, the electronic controller is configured to resume the failure determination when transmitting the activation notification.

3. The electronic controller according to claim 1 or 2, wherein
the in-vehicle network system (100) further includes a fourth device (64) having the network management function and configured to transmit the periodic message, and
the electronic controller is configured to
perform the failure determination on the first device (61) based on the periodic message received from the first device (61),
perform the failure determination on the fourth device (64) based on the periodic message received from the fourth device (64), and
stop the failure determinations performed on the first device (61) and the fourth device (64) when stopping transmission of the activation notification.

4. An electronic controller that is included in an in-vehicle network system (100) and has a network management function,
wherein the network management function includes switching from a standby state in which communication is not performed to an active state in which communication is performable when electronically receiving an activation notification, the activation notification being a message requesting activation,
the in-vehicle network system (100) includes
a first device (61) having the network management function and configured to transmit a periodic message, the periodic message being periodically transmitted,
a second device (62) having the network management function and configured to execute a failure determination that determines that the first device (61) has a failure when reception of the periodic message from the first device (61) is stopped,
a third device (63) having the network management function and a partial network function such that when receiving the activation notification and a destination of the activation notification differs from the third device (63), the third device (63) does not switch from the standby state to the active state,
a first network (81) configured to relay the periodic message, the first network (81) including a first communication bus (41) connected to the first device (61) and a second communication bus (42) connected to the second device (62) and the third device (63),
a relay device (10) connected to the first communication bus (41) and the second communication bus (42) and configured to electronically relay a message among communication buses, and
a second network (82) connecting the first device (61) and the second device (62), the second network (82) differing from the first network (81),
the electronic controller is the second device (62), and
the electronic controller is configured to stop the failure determination when detecting that the first device (61) is switched to the standby state based on communication with the first device (61) through the second network (82).

5. The electronic controller according to claim 4, wherein after stopping the failure determination, the electronic controller is configured to resume the failure determination when detecting that the first device (61) is switched to the active state based on communication with the first device (61) through the second network (82).

6. The electronic controller according to claim 4 or 5, wherein after stopping the failure determination, the electronic controller is configured to resume the failure determination when transmitting the activation notification.

7. The electronic controller according to any one of claims 4 to 6,
wherein the in-vehicle network system (100) further includes a fourth device (64) having the network management function and connected to the second device (62) through the first network (81) and the second network (82), the fourth device (64) being configured to transmit the periodic message through the first network (81),
the electronic controller is configured to
perform the failure determination on the first device (61) based on the periodic message received from the first device (61),
perform the failure determination on the fourth device (64) based on the periodic message received from the fourth device (64),
stop the failure determination on the first device (61) when detecting that the first device (61) is switched to the standby state based on communication with the first device (61) through the second network (82), and
stop the failure determination on the fourth device (64) when detecting that the fourth device (64) is switched to the standby state based on communication with the fourth device (64) through the second network (82).

8. The electronic controller according to any one of claims 1 to 7, wherein the electronic controller is configured to receive a message, as the periodic message, including information indicating travel speed of a vehicle including the in-vehicle network system (100).

9. An electronic controller that is included in an in-vehicle network system (100) and has a network management function, wherein
the network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification,
the in-vehicle network system (100) includes
a first device (61) having the network management function and configured to transmit a periodic message, the periodic message being periodically transmitted,
a second device (62) having the network management function and configured to execute a failure determination that determines that the first device (61) has a failure when reception of the periodic message from the first device (61) is stopped,
a third device (63) having the network management function and a partial network function such that when receiving the activation notification and a destination of the activation notification differs from the third device (63), the third device (63) does not switch from the standby state to the active state,
a first communication bus (41) connected to the first device (61),
a second communication bus (42) connected to the second device (62) and the third device (63), and
a relay device (10) connected to the first communication bus (41) and the second communication bus (42) and configured to electronically relay a message among communication buses,
the electronic controller differs from the first device (61) and the second device (62), and
when the first device (61) is switched to the standby state, instead of the first device (61), the electronic controller is configured to transmit the periodic message toward the second device (62).

10. The electronic controller according to claim 9, wherein
the electronic controller is the relay device (10), and
the electronic controller is configured to
while a communication peer of the first device (61) is transmitting the activation notification toward the first device (61), relay the activation notification and periodically transmit the activation notification toward the first device (61), and
when transmission of the activation notification toward the first device (61) is stopped, determine that the first device (61) is switched to the standby state and transmit the periodic message toward the second device (62).

11. The electronic controller according to claim 10, wherein when starting to transmit the periodic message and then transmitting the activation notification toward the first device (61), the electronic controller is configured to stop transmitting the periodic message toward the second device (62).

12. The electronic controller according to any one of claims 9 to 11, wherein
the in-vehicle network system (100) further includes a fourth device (64) having the network management function and configured to transmit the periodic message, the electronic controller differs from the first device (61), the second device (62), and the fourth device (64),
the second device (62) is configured to perform the failure determination on the first device (61) based on the periodic message received from the first device (61), and perform the failure determination on the fourth device (64) based on the periodic message received from the fourth device (64),
when the first device (61) is switched to the standby state, instead of the first device (61), the electronic controller is configured to transmit the periodic message for the failure determination on the first device (61) toward the second device (62), and
when the fourth device (64) is switched to the standby state, instead of the fourth device (64), the electronic controller is configured to transmit the periodic message for the failure determination on the fourth device (64) toward the second device (62).

13. The electronic controller according to any one of claims 9 to 12, wherein
the first device (61) is configured to transmit a message, as the periodic message, including information indicating travel speed of a vehicle including the in-vehicle network system (100), and
the electronic controller is configured to transmit a message, as the periodic message, including information indicating the travel speed when the first device (61) is switched to the standby state.

14. A determination method executed by an electronic controller that is included in an in-vehicle network system (100) and has a network management function, wherein
the network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification,
the in-vehicle network system (100) includes
a first device (61) having the network management function and configured to transmit a periodic message, the periodic message being periodically transmitted,
a second device (62) having the network management function and configured to execute a failure determination that determines that the first device (61) has a failure when reception of the periodic message from the first device (61) is stopped,
a third device (63) having the network management function and a partial network function such that when receiving the activation notification and a destination of the activation notification differs from the third device (63), the third device (63) does not switch from the standby state to the active state,
a first communication bus (41) connected to the first device (61),
a second communication bus (42) connected to the second device (62) and the third device (63), and
a relay device (10) connected to the first communication bus (41) and the second communication bus (42) and configured to electronically relay a message among communication buses, and
the electronic controller is the second device (62),
the determination method, comprising:
stopping the failure determination performed by the second device (62) with processing circuitry of the second device (62) when the second device (62) stops transmission of the activation notification.

15. A determination program executed by an electronic controller that is included in an in-vehicle network system (100) and has a network management function, wherein
the network management function includes (i) during a period in which communication with a communication peer is needed, periodically electronically transmitting an activation notification toward the communication peer, the activation notification being a message requesting activation, (ii) when electronically receiving the activation notification from a communication peer, switching from a standby state in which communication is not performed to an active state in which communication is performable, and (iii) continuing to be in the active state while periodically electronically receiving the activation notification,
the in-vehicle network system (100) includes
a first device (61) having the network management function and configured to transmit a periodic message, the periodic message being periodically transmitted,
a second device (62) having the network management function and configured to execute a failure determination that determines that the first device (61) has a failure when reception of the periodic message from the first device (61) is stopped,
a third device (63) having the network management function and a partial network function such that when receiving the activation notification and a destination of the activation notification differs from the third device (63), the third device (63) does not switch from the standby state to the active state,
a first communication bus (41) connected to the first device (61),
a second communication bus (42) connected to the second device (62) and the third device (63), and
a relay device (10) connected to the first communication bus (41) and the second communication bus (42) and configured to electronically relay a message among communication buses,
the electronic controller is the second device (62), and
the determination program, when executed by processing circuitry of the second device (62), causes the processing circuitry to stop the failure determination when the second device (62) stops transmission of the activation notification.
